# EUROPÄISCHE PATENTSCHRIFT

(11) **EP 0 471 156 B1**
(45) Veröffentlichungstag und Bekanntmachung des Hinweises auf die Patenterteilung: **02.03.1994**
(21) Anmeldenummer: 91108996.9
(22) Anmeldetag: 01.06.1991
(51) Int. Cl.: A01B 49/02

(54) **Kombinationsgerät zur Bodenbearbeitung**
Combined implements for soil working
Machine combinée pour le travail du sol

(30) Priorität: 16.08.1990 DE 9011862 U
(43) Veröffentlichungstag der Anmeldung: 19.02.1992
(73) Patentinhaber: Rabewerk GmbH + Co., 49152 Bad Essen (DE)
(72) Erfinder: Becker, Ignaz, Dipl.-Ing., W-4994 Preussisch-Oldendorf (DE); Warnking, Richard, Dipl-Ing., W-4515 Bad Essen 1 (DE)
(74) Vertreter: Missling, Arne, Dipl.-Ing.

(56) Entgegenhaltungen:
- EP-A- 0 118 775
- EP-A- 0 180 156
- EP-A- 0 359 896
- DE-U- 8 702 496
- FR-A- 2 312 929

## Beschreibung

Die Erfindung bezieht sich auf ein Kombinationsgerät mit einem Vorlockerer, einem nachgeordneten Hauptgerät, wie einer Kreiselegge, einem Zinkenrotor oder einer Fräse, und einer diesem nachgeordneten Walze, wobei der Vorlockerer mit einem Turm versehen ist, welcher über ein Dreipunktgestänge mit einem Schlepper koppelbar ist, wobei das Hauptgerät einen Turm umfaßt, welcher über Lenker höhenverschwenkbar mit dem Turm des Vorlockerers verbunden ist und wobei die Walze über Tragarme höhenveränderbar gelagert ist.

Kombinationsgeräte der genannten Art sind beispielsweise aus der EP-A2-359 896 oder dem DE-GBM 88 11 961 vorbekannt.

Bei Kombinationsgeräten zur Bodenbearbeitung ist es wünschenswert, in einem Arbeitsgang das zu bearbeitende Erdreich mittels eines Vorlockerers, beispielsweise eines Grubbers, zu lockern, nachfolgend mittels einer Bodenbearbeitungsmaschine, beispielsweise einer Kreiselegge, einem Zinkenrotor oder einer Fräse zu bearbeiten und nachfolgend durch eine Walze zu ebnen oder zu verdichten.

Eine Schwierigkeit bei diesem Kombinationsgeräten besteht darin, die Arbeitstiefe, insbesondere des Vorlockerers und des Hauptgerätes exakt einzuhalten und eine ausreichende Anpreßkraft auf die Walze zu übertragen. Das Einhalten der Arbeitstiefe bereitet in Abhängigkeit von der Bodenbeschaffenheit deswegen Probleme, weil es erforderlich sein kann, das Hauptgerät so auszubilden, daß dieses beim Auftreffen auf Bodenhindernisse, beispielsweise Steine, ausweichen kann. Hierdurch soll eine Beschädigung des Hauptgerätes verhindert werden. Wäre das Hauptgerät nicht höhenveränderbar gelagert, so würden dessen Werkzeuge beim Auftreffen auf die Bodenhindernisse sehr schnell beschädigt oder zerstört werden.

Das DE-GBM 88 11 961 zeigt, ebenso wie die EP-A2-359 896 jeweils eine Lösung, bei welcher die Tragarme der Walze direkt am Turm des Vorlockerers angelenkt sind, welcher auch die Parallelogrammlenker lagert, mit welchen ein Turm des Hauptgerätes an dem Turm des Vorlockerers angeschlossen ist. Das Hauptgerät stützt sich dabei über Auflager auf den Tragarmen der Walze ab. Es ist hierbei zwar eine Vertikalbewegung des Hauptgerätes unabhängig von dem Vorlockerer und der Walze möglich, unter bestimmten Betriebsbedingungen und in Abhängigkeit von der Ausgestaltung des Kombinationsgerätes kann es jedoch schwierig sein, die Walze und die Vorlockerer in annähernd gleicher Höhe zu halten, während eine dazwischen angeordnete Bodenbearbeitungsmaschine vertikale Bewegungen ausführen kann.

Die DE-OS 26 24 902 beschreibt eine Bodenbearbeitungsmaschine, bei welcher ein Dreipunktgestänge fest mit einem plattenartigen Rahmen verbunden ist, an welchem wiederum schwenkbar das Hauptgerät gelagert ist. Die Walze ist mit ihren Tragarmen an dem plattenartigen Gestell gelagert.

Der Erfindung liegt die Aufgabe zugrunde, ein Kombinationsgerät der eingangs genannten Art zu schaffen, welches bei einfacher Ausgestaltung und betriebssicherer Anwendbarkeit ein vertikales Ausweichen des Hauptgerätes unabhängig von der Stellung des Vorlockerers und der Walze ermöglicht.

Erfindungsgemäß wird die Aufgabe dadurch gelöst, daß die Tragarme der Walze am Hauptgerät angelenkt sind und daß eine zwangsläufige kinematische Koppelung zwischen der den Turm des Vorlockerers mit dem Turm des Hauptgerätes verbindenden Lenkeranordnung und den Tragarmen der Walze vorgesehen ist.

Die erfindungsgemäße Ausgestaltung zeichnet sich durch eine Reihe erheblicher Vorteile aus. Da sowohl das Hauptgerät höhenverstellbar an dem Vorlockerer, als auch die Walze höhenveränderbar an dem Hauptgerät angelenkt sind, ist es möglich, sämtliche drei Baugruppen in vertikaler Richtung zu bewegen. Durch die kinematische Koppelung zwischen der Lenkeranordnung und den Tragarmen der Walze wird erreicht, daß der Vorlockerer und die Walze in einer unveränderten Höhenposition verbleiben, wenn das Hauptgerät vertikal verstellt wird. Der Vorlockerer und die Walze verbleiben somit auf bzw. in dem zu bearbeitenden Erdreich, ihre Funktionsweise wird durch Höhenverstellungen des Hauptgerätes nicht beeinflußt. Unabhängig von der einzelnen Ausbildung des Hauptgerätes kann dieses somit beim Auftreffen auf Bodenhindernisse ausweichen, wodurch die Gefahr einer Beschädigung der Werkzeuge des Hauptgerätes vermieden wird. Die Lenkeranordnung und die Anordnung und Ausgestaltung der Tragarme der Walze ermöglichen es somit, daß bevorzugt zapfwellengetriebene Hauptgeräte zwischen einem vorderen ruhenden Werkzeugsatz und einer hinteren ruhenden Walze anzuordnen sind. Es besteht somit eine von dem vorderen Vorlockerer das Hauptgerät übergreifende Verbindung zu der Walze. Dabei wird insbesondere eine synchrone Koppelung einer Bewegung des Vorlockerers mit einer Bewegung der Walze erreicht.

In einer besonders günstigen Weiterbildung der Erfindung ist vorgesehen, daß ein Unterlenker der Lenkeranordnung am, in Fahrtrichtung gesehen, hinteren Bereich und die Tragarme der Walze am unteren, vorderen Bereich des Hauptgerätes gelagert sind und daß die kinematische Koppelung in Form einer den Tragarm und den Unterlenker verbindenden Lasche ausgebildet ist. Diese Ausführungsform ist besonders einfach und kostengünstig herstellbar, da nur sehr wenige Verbindungselemente und Anlenkpunkte erforderlich sind.

Alternativ zu dieser Ausführungsform kann es auch günstig sein, wenn ein Traggestell der Walze, beispielsweise ein Querbalken, mit einem Oberlenker der Lenkeranordnung gekoppelt ist. Die Koppelung kann beispielsweise dadurch erfolgen, daß der Oberlenker als Doppel-Hebel ausgebildet ist, dessen vorderer und mittlerer Bereich am Turm des Vorlockerers bzw. des Hauptgerätes gelagert sind und dessen anderes Ende über eine Lenkerstange mit dem Traggestell der Walze verbunden ist. Als zusätzliches Bauelement ist hierbei lediglich die Lenkerstange erforderlich.

Bei den beiden oben beschriebenen Ausführungsbeispielen kann das Hauptgerät beispielsweise in Form einer Kreiselegge ausgestaltet sein.

In einem weiteren, besonders günstigen Ausführungsbeispiel ist vorgesehen, daß ein Unterlenker und ein Tragarm der Walze als Hebel ausgebildet sind, deren freie Enden in Anlage bringbar sind. Dabei ist beispielsweise an dem freien Ende des Unterlenkers eine Gleitrolle vorgesehen, welche an dem freien Ende des Tragarmes abrollen kann. Zusätzlich kann es günstig sein, an dem Hauptgerät, beispielsweise an dessen Turm Anschläge zur Begrenzung des Schwenkwinkels des Unterlenkers und/oder der Tragarme anzubringen. Das Hauptgerät kann dabei z.B. als Zinkenrotor ausgebildet sein.

In weiterer, bevorzugten Ausgestaltung der Erfindung, bei welcher das Hauptgerät ebenfalls ein Zinkenrotor sein kann, ist vorgesehen, daß die Unterlenker am Turm des Vorlockerers und des Traggestells der Walze gelagert und als Hebel ausgebildet sind, deren freies Ende über eine Lenkerstange mit dem Turm des Hauptgerätes gekoppelt ist. Die Tragarme der Walze sind dabei bevorzugt im vorderen Bereich des Turms des Hauptgelenkes gelagert.

Weiterhin kann es erfindungsgemäß günstig sein, wenn am mittleren Bereich des Unterlenkers ein erster Schräglenker angelenkt ist, dessen anderes Ende mit dem mittleren Bereich eines zweiten Schräglenkers gekoppelt ist, welcher schwenkbar mit dem Traggestell der Walze verbunden ist und dessen anderes Ende über einen mittleren Lenker mit dem mittleren Bereich des Turmes des Vorlockerers in Verbindung steht.

Erfindungsgemäß erfolgt die Abstützung der Walze gegenüber dem Hauptgerät so, daß das Traggestell der Walze am oberen Bereich des Turms des Hauptgerätes über eine längenveränderbare Strebe abgestützt ist. Diese Strebe ist bevorzugt teleskopartig ausgebildet und weist einen Anschlag auf, welcher die minimale Länge der Strebe begrenzt. Somit kann das Hauptgerät beim Auftreffen auf Bodenhindernisse angehoben werden, wobei sich die Länge der Strebe vergrößert. Bei abgesenktem Hauptgerät bildet der Anschlag einen Auflagerpunkt für die Strebe. Es ist besonders günstig, wenn der Anschlag einstellbar ausgebildet ist, beispielsweise mittels einer auf einem Gewindebolzen verschiebbaren Mutter oder mit Hilfe von Einsteckstiften, welche in eine Anordnung von Ausnehmungen einbringbar sind.

Im folgenden wird die Erfindung anhand von Ausführungsbeispielen in Verbindung mit der Zeichnung beschrieben. Dabei zeigt:
- Fig. 1: eine schematische Seitenansicht eines ersten Ausführungsbeispieles des erfindungsgemäßen Kombinationsgerätes,
- Fig. 2: eine Seitenansicht eines weiteren Ausführungsbeispieles eines Kombinationsgerätes,
- Fig. 3: eine weitere Seitenansicht eines weiteren Ausführungsbeispieles des erfindungsgemäßen Kombinationsgerätes,
- Fig. 4: eine Seitenansicht eines weiteren Ausführungsbeispieles des Kombinationsgerätes,
- Fig. 5: eine Draufsicht auf die Ausgestaltungsform gemäß Fig. 3,
- Fig. 6: eine Seitenansicht eines weiteren Ausführungsbeispieles des erfindungsgemäßen Kombinationsgerätes,
- Fig. 7: eine kinematische Darstellung der Bewegungsabläufe des in Fig. 4 gezeigten Ausführungsbeispieles und
- Fig. 8: eine kinematische Darstellung, ähnlich Fig. 7, der Bewegungsabläufe des Ausführungsbeispieles gemäß Fig. 6.

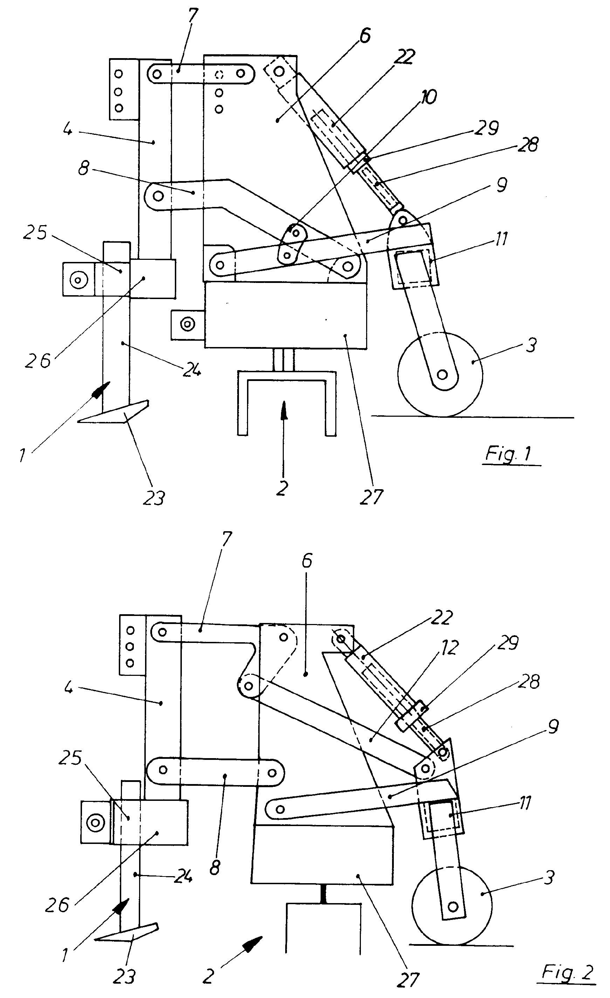

Die Fig. 1 zeigt ein erstes Ausführungsbeispiel des erfindungsgemäßen Kombinationsgerätes, bei den weiteren Ausführungsbeispielen werden gleiche Teile mit gleichen Bezugsziffern versehen, so daß sich eine detaillierte Beschreibung jeweils erübrigt.

Das Kombinationsgerät umfaßt einen Vorlockerer 1, ein Hauptgerät 2 sowie eine nachgeordnete Walze 3. Der Vorlockerer 1 ist beispielsweise mit Grubberscharen 23 versehen, welche an Stielen 24 angebracht sind, die in Taschen 25 einstellbar gehaltert sind. Die Taschen 25 sind an einem Querbalken 26 befestigt, welcher mit einem Turm 4 verbunden ist. Der Turm 4 ist mit Anlenkpunkten für ein Dreipunktgestänge zum Anschluß an einen Schlepper (nicht dargestellt) versehen.

Das Hauptgerät, welches in Fig. 1 als Kreiselegge ausgebildet ist, ist mit einem Turm 6 versehen, der über zumindest einen Oberlenker 7 und Unterlenker 8 mit dem Turm 4 verbunden ist. Der Unterlenker 8 ist am, in Fahrtrichtung gesehen, hinteren Bereich des Turms 6 angelenkt. Der Turm 6 kann beispielsweise in Form seitlicher Platten ausgestaltet sein.

An dem, in Fahrtrichtung gesehen, vorderen Bereich des Turms 6 sind Tragarme 9 der Walze 3 gelagert. Die Tragarme 9 sind über ein Traggestell 11 (Querbalken) mit der Walze 3 betriebsverbunden.

Im mittleren Bereich der Tragarme 9 und der Unterlenker 8 ist eine Lasche 10 gelenkig zwischen diesen angebracht, welche eine Bewegung der Tragarme 9 und der Unterlenker 8 koppelt.

Die Anlenkung der Unterlenker 8 und der Tragarme 9 kann alternativ zu dem Turm 6 auch an einem Getriebekasten 27 des Hauptgerätes 2 erfolgen. Der Querbalken des Traggestelles 11 der Walze 3 erstreckt sich über die gesamte Länge der Walze, die Tragarme 9 sind nicht am äußeren Ende des Getriebekastens 27 angeordnet, sondern rechts und links von dem wie gewöhnlich dreieckig ausgeführten Turm 6 des Hauptgerätes. Die Tragarme 9 und die Unterlenker 8 müssen nicht an der angegebenen Stelle angebracht sein, sondern können auch an den Enden des Getriebekastens 27 angebracht sein, wobei sich dann der Querbalken des Traggestelles 11 erübrigen würde.

Bei einer Ausweichbewegung des Hauptgerätes 2 nach oben wird durch die Koppelung mittels der Lasche 10 erreicht, daß die Walze 3 sowie der Vorlockerer 1 in der vorgegebenen Ausgangsstellung verbleiben.

Die Abstützung der Walze 3 an dem Turm 6 erfolgt bei diesem Ausführungsbeispiel, ebenso wie bei den nachfolgend beschriebenen Ausführungsbeispielen, über eine Strebe 22, welche teleskopartig ausgebildet und somit längenveränderbar ist. Die Strebe umfaßt eine Gewindespindel 28, auf welcher eine Mutter 29 verstellbar aufgeschraubt ist. Die Mutter 29 stützt sich gegen den rohrartigen Bereich der Strebe 22, so daß deren Minimallänge durch die Mutter 29 begrenzt ist.

Bei dem in Fig. 2 gezeigten Ausführungsbeispiel ist die Koppelung der Tragarme 9 mit dem Oberlenker 7 erfolgt. Dieser ist in Form eines Winkelhebels ausgebildet, an dessen freiem Ende eine Lenkerstange 12 angelenkt ist, welche mit ihrem anderen Ende an dem Traggestell 11 der Walze 3 angelenkt ist. Die Ankoppelung des Tragarmes 9 erfolgt wie bei dem in Fig. 1 beschriebenen Ausführungsbeispiel, der Unterlenker 8 ist jeweils an einem vorderen Bereich des Turms 6 angelenkt.

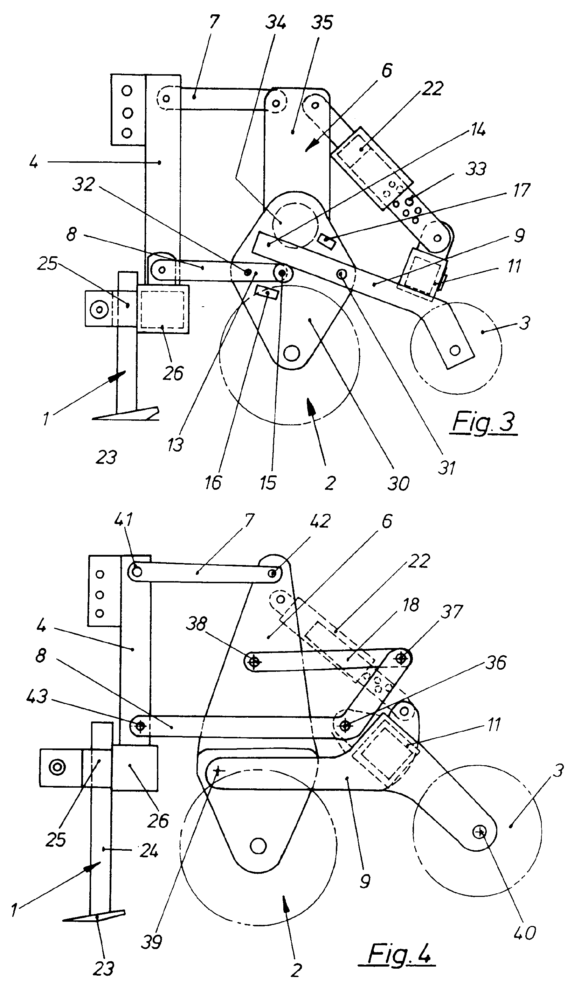

Bei den Ausführungsbeispielen der Fig. 3 und 4 ist als Hauptgerät ein Zinkenrotor dargestellt. An den Seiten des Gerätes befinden sich Seitenplatten 30, welche mit dem Turm 6 verbunden sind. An den Seitenplatten 30 ist an einem Lagerpunkt 31 der jeweilige Tragarm 9 verschwenkbar gelagert. Dessen freies Ende 14 befindet sich in Kontakt mit einer Gleitrolle 15, welche am freien Ende 13 des Unterlenkers 8 vorgesehen ist. Dieser ist an dem Lagerpunkt 32 an der jeweiligen Seitenplatte 30 schwenkbar gelagert. Wenn der Zinkenrotor nach oben ausweicht, verschwenken sich die vorderen Enden 14 der Tragarme 9 etwas nach oben, so daß die Unterlenker 8 in Folge des Gewichts und der Einzugskräfte des Vorlockerers 1 relativ zu den Seitenplatten 30 nach unten verschwenken können. Der Vorlockerer 1 verbleibt somit in seiner Normallage, wenn der Zinkenrotor 2 nach oben ausweicht.

Bei dem in Fig. 3 gezeigten Ausführungsbeispiel umfaßt die Stützstrebe 22, wie dargestellt, einen rohrartigen Teil, in welchem verschiebbar eine Stange 33 angeordnet ist, welche mit einer Vielzahl von Ausnehmungen versehen ist, in die Steckbolzen o.ä. einbringbar sind.

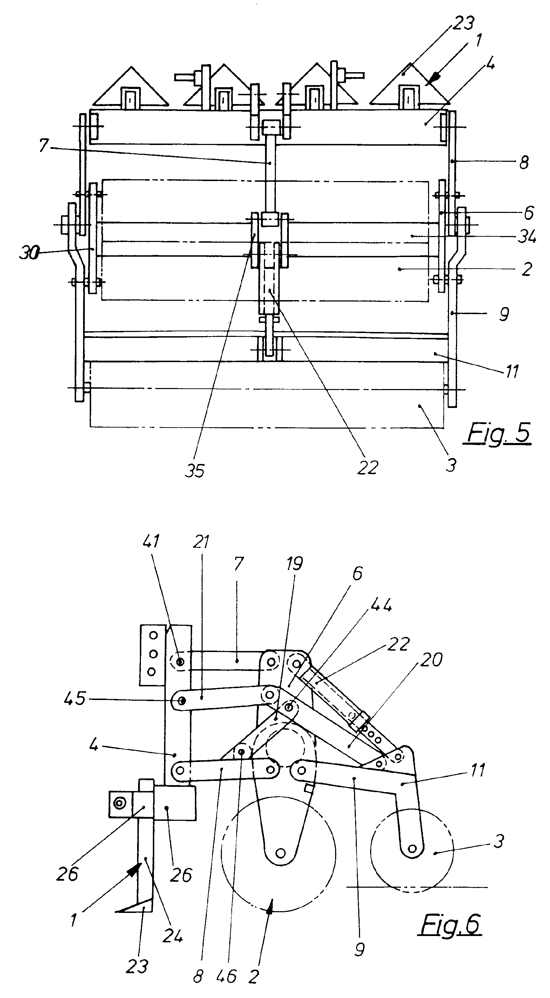

Die Fig. 5 zeigt eine Draufsicht auf das Ausführungsbeispiel gemäß Fig. 3, aus dieser Draufsicht ergibt sich die Anordnung der Seitenplatten 30, welche den Turm 6 bilden. Die Seitenplatten 30 sind an äußeren Enden von Gestellrohren 34 befestigt, welche im mittleren Bereich an Seitenteilen 35, welche einen Teil des Turmes 6 bilden, befestigt sind. Zwischen den Seitenwänden 35 befindet sich das im einzelnen nicht dargestellte Eingangsgetriebe. In den Rohren 34 sind die Antriebswellen angebracht, die an den Maschinenseiten mit Getrieben verbunden sind, die den Antrieb von den Wellen zum Zinkenrotor leiten. Diese Antriebsverbindung ist im einzelnen in Fig. 5 nicht dargestellt, da sie für die vorliegende Erfindung von geringerer Bedeutung ist.

Ähnlich der Gleitrolle 15 bei dem in Fig. 3 gezeigten Ausführungsbeispiel besteht auch die Möglichkeit, die Lasche 10 bei dem in Fig. 1 gezeigten Ausführungsbeispiel zu modifizieren und durch eine Gleitrolle o.ä. zu ersetzen.

Wie in Fig. 3 gezeigt, sind an den Seitenplatten 30 Anschläge 16,17 angebracht, welche die maximale Schwenkbewegung des Tragarmes 9 bzw. des Unterlenkers 8 begrenzen.

In Fig. 4 ist ein weiteres Ausführungsbeispiel dargestellt, bei welchem die Unterlenker 8 an einem Gelenkpunkt 36 des Traggestells 11 der Walze 3 angelenkt sind. Die Unterlenker 8 sind in Form von abgewinkelten Doppelhebeln ausgebildet, an deren freien Enden Gelenkpunkte 37 vorgesehen sind, an welchen jeweils eine Lenkerstange 18 schwenkbar gelagert ist, deren freies Ende am Gelenkpunkt 38 an dem Turm 6 gelagert ist. Weiterhin sind die Tragarme 9 am vorderen Bereich des Turmes 6 im Bereich der Gelenkpunkte 39 schwenkbar angelenkt. Bei diesem Ausführungsbeispiel ist das Hauptgerät als Zinkenrotor ausgebildet.

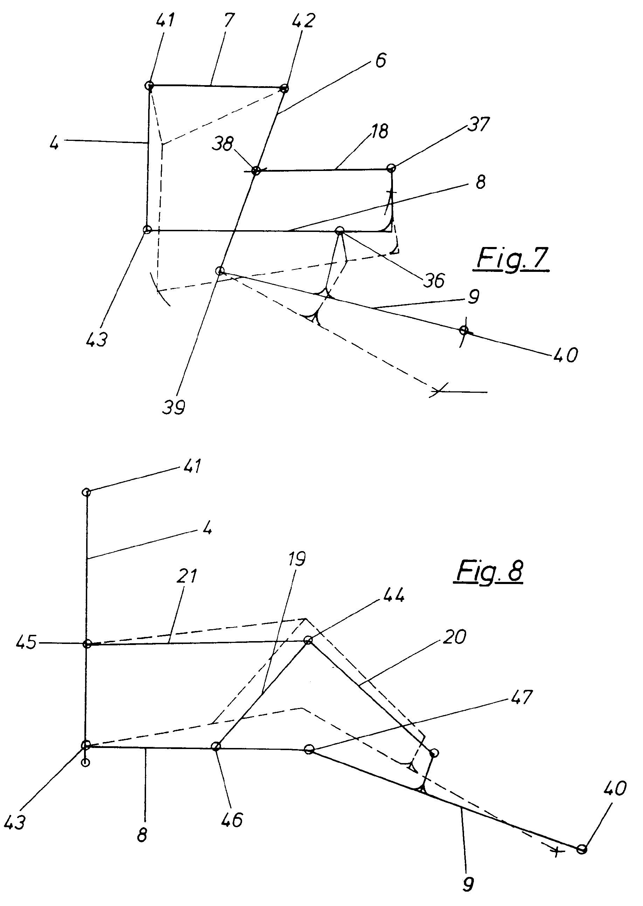

Die Fig. 7 zeigt eine kinematische Darstellung der Bewegungsabläufe, wobei zur Vereinfachung der Darstellung der Turm 6 als ruhend angenommen wurde und dementsprechend der Turm 4 bzw. die Walze 3 mit deren Walzenachse 40 verschwenkt ist. Der Oberlenker 7 ist dabei über einen vorderen Gelenkpunkt 41 mit dem Turm 4 und über einen hinteren Gelenkpunkt 42 mit dem Turm 6 verbunden, während der Unterlenker 8 an dem Gelenkpunkt 43 an dem Turm 4 gelagert ist.

Bei dem in Fig. 6 gezeigten Ausführungsbeispiel ist der Turm 6 über Oberlenker 7 und Unterlenker 8 mit dem Turm 4 schwenkbar verbunden. Der Tragarm 9 ist am hinteren Bereich des Turmes 6 angelenkt und mit dem Traggestell 11 verbunden, welches, wie bei den vorhergehenden Ausführungsbeispielen, über die Strebe 22 gegen den Turm 6 abgestützt ist.

Im mittleren Bereich des Unterlenkers 8 ist ein erster Schräglenker 19 angelenkt, welcher schwenkbar mit einem zweiten Schräglenker 20 verbunden ist, dessen anderes Ende am hinteren Bereich des Tragarmes 9 gelagert ist. Eine überstehender vorderer Endbereich des zweiten Schräglenkers 20 ist gelenkig mit einem mittleren Lenker 21 verbunden, welcher im mittleren Bereich des Turmes 4 des Vorlockerers 1 schwenkbar gelagert ist. Der erste Schräglenker 19 und der zweite Schräglenker 20 sind an einem Gelenkpunkt 44 miteinander verbunden, der mittlere Lenker 21 ist an einem Gelenkpunkt 45 an dem Turm 4 gelagert. Die Lagerstelle des ersten Schräglenkers 19 an dem Unterlenker 8 erfolgt an dem Gelenkpunkt 46. Die Fig. 8 zeigt eine schematische Darstellung, bei welcher der mittlere Lenker 21 und der zweite Schräglenker 20 an dem gemeinsamen Gelenkpunkt 44 angebracht sind, ebenso ist der Tragarm 9 an dem Unterlenker 8 an einem Gelenkpunkt 47 verbunden.

Bei dem Ausführungsbeispiel gemäß Fig. 6 ergeben sich mehrere Möglichkeiten, den Gelenkpunkt 44, an welchem der erste Schräglenker 19 mit dem zweiten Schräglenker 20 verbunden ist, zu führen. Dieser Gelenkpunkt 44 wird auf einer bestimmten Bahn geführt, so daß der Unterlenker 8 eine Schwenkung nach unten macht, wenn der Tragarm 11 nach unten verschwenkt wird. Die Führung des Gelenkpunktes 44 erfolgt durch den mittleren Lenker 21. Weiterhin könnte der Gelenkpunkt 44 in einer Kulisse geführt sein, die an den Seitenwänden des Turmes 6 vorgesehen ist. Es wäre auch möglich, das andere Ende des mittleren Lenkers 21 an einem vorderen oder hinteren Bereich der Seitenwand des Turmes 6 anzulenken.

## Patentansprüche

1. Kombinationsgerät mit einem vorlockerer (1), einem nachgeordneten Hauptgerät (2), wie einer Kreiselegge, einem Zinkenrotor oder eine Fräse, und einer diesem nachgeordneten Walze (3), wobei der Vorlockerer (1) mit einem Turm (4) versehen ist, welcher über ein Dreipunktgestänge mit einem Schlepper koppelbar ist, wobei das Hauptgerät (2) einen Turm (6) umfaßt, welcher über Lenker (7,8) höhenveränderbar mit dem Turm (4) des Vorlockerers (1) verbunden ist und wobei die Walze (3) über Tragarme (9) höhenveränderbar gelagert ist, dadurch gekennzeichnet, daß die Tragarme (9) der Walze (3) am Hauptgerät (2) angelenkt sind und daß eine zwangsläufige kinematische Koppelung zwischen der den Turm (4) des Vorlockerers (1) mit dem Turm (6) des Hauptgerätes (2) verbindenden Lenkeranordnung (7,8) und den Tragarmen (9) der Walze (3) vorgesehen ist.

2. Kombinationsgerät nach Anspruch 1, dadurch gekennzeichnet, daß ein Unterlenker (8) der Lenkeranordnung am, in Fahrtrichtung gesehen, hinteren Bereich und die Tragarme (9) der Walze (3) am unteren, vorderen Bereich des Hauptgerätes (2) gelagert sind und daß die kinematische Koppelung in Form einer den Tragarm (9) und den Unterlenker (8) verbindenden Lasche (10) ausgebildet ist. (Fig. 1).

3. Kombinationsgerät nach Anspruch 1, dadurch gekennzeichnet, daß ein Traggestell (11) der Walze (3) mit einem Oberlenker (7) der Lenkeranordnung gekoppelt ist. (Fig. 2).

4. Kombinationsgerät nach Anspruch 3, dadurch gekennzeichnet, daß der Oberlenker (7) als Hebel ausgebildet ist, dessen vorderer und mittlerer Bereich am Turm (4,6) des Vorlockerers (1) bzw. des Hauptgerätes (2) gelagert sind und dessen anderes Ende über eine Lenkerstange (12) mit dem Traggestell (11) der Walze (3) verbunden ist.

5. Kombinationsgerät nach Anspruch 1, dadurch gekennzeichnet, daß ein Unterlenker (8) und ein Tragarm (9) der Walze (3) als Hebel ausgebildet sind, deren freie Enden (13,14) in Anlage bringbar sind. (Fig. 3).

6. Kombinationsgerät nach Anspruch 5, dadurch gekennzeichnet, daß das freie Ende (13) des Unterlenkers (8) mit einer Gleitrolle (15) versehen ist.

7. Kombinationsgerät nach Anspruch 5 oder 6, gekennzeichnet durch Anschläge (16,17) zur Begrenzung des Schwenkwinkels des Unterlenkers (8) und/oder des Tragarmes (9).

8. Kombinationsgerät nach Anspruch 1, dadurch gekennzeichnet, daß die Unterlenker (8) am Turm (4) des Vorlockerers (1) und des Traggestells (11) der Walze (3) gelagert und als Hebel ausgebildet sind, deren freies Ende über eine Lenkerstange (18) mit dem Turm (6) des Hauptgerätes (2) gekoppelt ist. (Fig. 4).

9. Kombinationsgerät nach Anspruch 1, dadurch gekennzeichnet, daß am mittleren Bereich des Unterlenkers (8) ein erster Schräglenker (19) angelenkt ist, dessen anderes Ende mit dem mittleren Bereich des zweiten Schräglenkers (20) gekoppelt ist, welcher schwenkbar mit dem Traggestell (11) der Walze (3) verbunden ist und dessen anderes Ende über einen mittleren Lenker (21) mit dem mittleren Bereich des Turms (4) des Vorlockerers (1) in Verbindung steht. (Fig. 6).

10. Kombinationsgerät nach einem der Ansprüche 1 bis 9, dadurch gekennzeichnet, daß das Traggestell (11) der Walze (3) am oberen Bereich des Turms (6) des Hauptgerätes (2) über eine längenveränderbare Strebe (22) abgestützt ist.

11. Kombinationsgerät nach Anspruch 10, dadurch gekennzeichnet, daß die Strebe (22) teleskopartig ausgebildet ist und mit einem die minimale Länge begrenzenden Anschlag versehen ist.

12. Kombinationsgerät nach Anspruch 11, dadurch gekennzeichnet, daß der Anschlag einstellbar ist.

## Claims

1. Combined implements, having a pre-loosening device (1), a subsequently arranged principal device (2) such as a circular harrow, a pronged rotor or cutter, and a roller (3) arranged subsequently thereto, the pre-loosening device (1) being provided with an upright member (4) which can be connected to a tractor by way of a three-point rod assembly, the principal device (2) comprising an upright member (6) which is connected to the upright member (4) of the pre-loosening device (1) by way of connecting rods (7, 8) so as to be adjustable in height, and the roller (3) being mounted so as to be adjustable in height by way of carrier arms (9), **characterised in that** the carrier arms (9) of the roller (3) are pivotably linked to the principal device (2) and in that a forced kinematic coupling is provided between the carrier arms (9) of the roller (3) and the rod arrangement (7, 8) connecting the upright member (4) of the pre-loosening device (1) to the upright member (6) of the principal device (2).

2. Combined implements according to claim 1, **characterised in that,** seen in the direction of travel, a lower rod (8) of the rod arrangement is mounted on the rear section of the principal device (2), and the carrier arms (9) of the roller (3) are mounted on the lower forward section of the principal device (2), and in that the kinematic coupling is designed in the form of a bracket (10) connecting the carrier arm (9) and the lower rod (8) (fig. 1).

3. Combined implements according to claim 1, **characterised in that** a carrier frame (11) of the roller (3) is connected to an upper rod (7) of the rod arrangement (Fig. 2).

4. Combined implements according to claim 3, **characterised in that** the upper rod (7) is designed as a lever, the forward and middle sections of which are mounted on the upright member (4, 6) of the end of which is connected via a steering rod (12) to the carrier frame (11) of the roller (3).

5. Combined implements according to claim 1, **characterised in that** a lower rod (8) and a carrier arm (9) of the roller (3) are in the form of a lever, the free ends (13, 14) of which can be brought into contact (Fig. 3).

6. Combined implements according to claim 5, **characterised in that** the free end (13) of the lower rod (8) is provided with a sliding roller (15).

7. Combined implements according to claim 5 or 6, **characterised by** stops (16, 17) to limit the pivoting angle of the lower rod (8) and/or the carrier arm (9).

8. Combined implements according to claim 1, **characterised in that** the lower arms (8) are mounted on the upright member (4) of the pre-loosening device (1) and the carrier frame (11) of the roller (3), and are in the form of a lever, the free end of which is connected via a steering rod (18) to the upright member (6) of the principal device (2) (fig. 4).

9. Combined implements according to claim 1, **characterised in that,** pivoted on the middle section of the lower arm (8), there is a first diagonal rod (19), the other end of which is linked to the middle section of the [*sic*] second diagonal rod (20), which is pivotably connected to the carrier frame (11) of the roller (3), and the other end of which is connected via a middle rod (21) to the middle section of the upright member (4) of the pre-loosening device (1) (Fig. 6).

10. Combined implements according to one of claims 1 to 9, **characterised in that** the carrier frame (11) of the roller (3) is supported on the upper section of the upright member (6) of the principal device (2) by means of a strut (22) which is adjustable in length.

11. Combined implements according to claim 10, **characterised in that** the strut (22) is formed to be telescopic and is provided with a stop limiting the minimum length.

12. Combined implements according to claim 11, **characterised in that** the stop is adjustable.

## Revendications

1. Machine combinée comportant un outil d'ameublissement préalable du sol (1), un outil principal (2) , comme une herse rotative, un rotor denté ou une fraise, placé après le premier, et un rouleau (3) placé après ce dernier, l'outil d'ameublissement préalable du sol (1) étant équipé d'une tourelle (4) pouvant être attelée, au moyen d'un attelage à trois points, à un tracteur, l'outil principal (2) comportant une tourelle (6) reliée à la tourelle (4) de l'outil d'ameublissement préalable du sol (1), avec possibilité de modifier la hauteur, par l'intermédiaire de bras (7, 8), et le rouleau 3 étant monté avec possibilité de modifier sa hauteur, au moyen de bras porteurs (9),
caractérisée en ce que les bras porteurs (9) du rouleau (3) sont articulés sur l'outil principal (2) et en ce qu'un accouplement cinématique commandé est prévu entre le système articulé (7, 8) reliant la tourelle (4) de l'outil d'ameublissement préalable du sol (1) à la tourelle (6) de l'outil principal (2) et les bras porteurs (9) du rouleau (3).

2. Machine combinée suivant la revendication 1, caractérisée en ce qu'un bras d'articulation inférieur (8) du système articulé est monté sur la zone arrière (par rapport au sens de déplacement), et les bras supports (9) du rouleau (3) sur la zone inférieure avant, de l'outil principal (2), et en ce que l'accouplement cinématique est réalisé sous la forme d'une jumelle (10) reliant le bras support (9) et le bras d'articulation inférieur (8) (figure 1).

3. Machine combinée suivant la revendication 1, caractérisée en ce qu'un châssis porteur (11) du rouleau (3) est accouplé à un bras d'articulation supérieur (7) du système articulé (figure 2).

4. Machine combinée suivant la revendication 3, caractérisée en ce que le bras d'articulation supérieur (7) est réalisé sous la forme d'un levier dont la zone avant et la zone du milieu sont montées, respectivement sur la tourelle (4) de l'outil d'ameublissement préalable du sol (1) et sur la tourelle (6) de l'outil principal (2), et dont l'autre extrémité est reliée, par l'intermédiaire d'une tige d'articulation (12), au châssis porteur (11) du rouleau (3).

5. Machine combinée suivant la revendication 1, caractérisée en ce qu'un bras d'articulation inférieur (8) et un bras support (9) du rouleau (3) sont réalisés sous la forme de leviers, dont les extrémités libres (13, 14) peuvent être mises en appui (figure 3).

6. Machine combinée suivant la revendication 5, caractérisée en ce que l'extrémité libre (13) du bras d'articulation inférieur (8) est équipée d'un galet de coulissement (15).

7. Machine combinée suivant la revendication 5 ou la revendication 6, caractérisée par des butées (16, 17) pour limiter l'angle de pivotement du bras d'articulation inférieur (8) et/ou du bras support (9).

8. Machine combinée suivant la revendication 1, caractérisée en ce que les bras d'articulation inférieurs (8) sont montés sur la tourelle (4) de l'outil d'ameublissement préalable du sol (1) et du châssis porteur (11) du rouleau (3), et sont réalisés sous la forme de leviers dont l'extrémité libre est accouplée, par l'intermédiaire d'une tige d'articulation (18) à la tourelle (6) de l'engin principal (2) (figure 4).

9. Machine combinée suivant la revendication 1, caractérisée en ce que, sur la zone du milieu du bras d'articulation inférieur (8), s'articule un premier bras d'articulation incliné (19), dont l'autre extrémité est accouplée à la zone du milieu d'un deuxième bras d'articulation incliné (20), lequel est relié, avec possibilité de pivoter, au châssis porteur (11) du rouleau (3) et dont l'autre extrémité est reliée, par l'intermédiaire d'un bras d'articulation central (21), à la zone centrale de la tourelle (4) de l'outil d'ameublissement préalable du sol (1) (figure 6).

10. Machine combinée suivant l'une quelconque des revendications 1 à 9, caractérisée en ce que le châssis porteur (11) du rouleau (3) s'appuie sur la zone supérieure de la tourelle (6) de l'outil principal (2) par l'intermédiaire d'une barre (22) dont on peut modifier la longueur.

11. Machine combinée suivant la revendication 10, caractérisée en ce que la barre (22) est réalisée télescopique et est équipée d'une butée limitant sa longueur minimale.

12. Machine combinée suivant la revendication 11, caractérisée en ce que la butée est réglable.
